# EUROPÄISCHE PATENTSCHRIFT

(11) **EP 2 089 254 B1**
(45) Veröffentlichungstag und Bekanntmachung des Hinweises auf die Patenterteilung: **01.12.2010**
(21) Anmeldenummer: 08760131.6
(22) Anmeldetag: 28.05.2008
(51) Int. Cl.: B60R 21/217

(54) **GASSACKBEFESTIGUNG IN EINEM AIRBAGMODUL**
AIRBAG ATTACHMENT IN AN AIRBAG MODULE
FIXATION DE SAC À GAZ DANS UN MODULE D'AIRBAG

(30) Priorität: 04.06.2007 DE 202007007885 U
(43) Veröffentlichungstag der Anmeldung: 19.08.2009
(73) Patentinhaber: Takata-Petri AG, 63743 Aschaffenburg (DE)
(72) Erfinder: HAMELS, Stefan, 63743 Aschaffenburg (DE)
(74) Vertreter: Baumgärtel, Gunnar
(86) Internationale Anmeldenummer: PCT/EP2008/056536
(87) Internationale Veröffentlichungsnummer: WO 2008/148676

(56) Entgegenhaltungen:
- EP-A- 0 865 974
- DE-A1- 19 804 579
- DE-U1- 20 106 695
- GB-A- 2 323 572
- US-A- 5 582 423
- US-A- 5 709 401

## Beschreibung

Die Erfindung betrifft eine Gassackbefestigung in einem Airbagmodul nach dem Oberbegriff des Anspruchs 1.

Aus der DE 198 04 579 A1 und aus dem US-Patent 5 709 401 ist es bekannt, den Generatorträger, den Gassack und die Abdeckkappe im Airbagmodul mittels Haken miteinander zu verbinden. Hierzu sind an einem Seitenrand der Abdeckkappe und im Bereich des Einblasmundes des Gassacks Schlitze vorhanden, in die bei der Montage Haken am Generatorträger greifen. Zur Sicherung werden diese Haken nach der Montage der genannten drei Baugruppen umgebogen.

Diese Anordnung weist den Nachteil auf, dass die Haken den gefalteten Gassack klemmen. Deshalb besteht bei einem vakuumgefalteten Gassack, der in Folie verpackt ist, die Gefahr, dass diese durch die Haken beschädigt wird.

Der Erfindung liegt die Aufgabe zugrunde, den Gassack in einem Airbagmodul so mittels Rastelementen zu befestigen, dass der Gassack bzw. eine ihn einschließende Folie nicht direkt durch Rastelemente geklemmt wird.

Erfindungsgemäß wird das gemäß den Merkmalen des Anspruchs 1 erreicht.

Bei einer Gassackbefestigung in einem Airbagmodul mit einem Generatorträger, mit einem Gassack mit Einblasmund, wobei das Airbagmodul mindestens eine Seitenwand aufweist, und mit mindestens einem verformbaren mechanischen Element zur Verbindung des Generatorträgers mit der Seitenwand, weist erfindungsgemäß das Airbagmodul an seiner Seitenwand Klemmbacken für die Befestigung des Gassacks im Bereich seines Einblasmundes auf und die verformbaren mechanischen Elemente sind am Generatorträger vorgesehen und wirken auf mindestens eine der Klemmbacken ein. Als Seitenwand ist vorzugsweise die einer Airbagkappe vorgesehen und als verformbare mechanische Elemente sind vorzugsweise Rastelemente oder solche Elemente vorgesehen, die von außen plastisch verformbar sind.

Diese Anordnung weist den Vorteil auf, dass infolge der Befestigung des Gassacks zusammen mit der gegebenenfalls den Gassack einhüllenden Folie mittels Klemmbacken die Gefahr einer Beschädigung der Folie bzw. des Gassacks durch die Rastelemente nicht mehr besteht. Dadurch dass die verformbaren mechanischen Elemente auf eine der Klemmbacken einwirken, entfällt das direkte Klemmen des Gassacks und damit auch die Einwirkung auf die den Gassack einhüllenden Folie.

Vorzugsweise weist der Gassack mindestens ein nach außen ragendes Klemmelement auf, dem nach innen ragende, im Abstand übereinander liegende Klemmbacken als mindestens ein Klemmbackenpaar zugeordnet sind, das zwischen dem Generatorträger und den verformbaren mechanischen Elementen klemmbar ist.

Die verformbaren mechanischen Elemente sind vorzugsweise an einer annähernd parallel zur jeweiligen Seitenwand der Airbagkappe verlaufenden Seitenwand des Generatorträgers angeordnet und jedes verformbare mechanische Element ist einer oberen Klemmbacke der Airbagkappe durch Öffnungen in der Seitenwand der Airbagkappe zugeordnet. Zusätzlich kann die obere Klemmbacke einen Anschlag aufweisen, der zwischen dem Gassack und dem verformbaren mechanischen Element liegt, so dass auch eine Berührung des Gassacks durch die verformbaren mechanischen Elemente ausgeschlossen ist.

Um das leichte Einführen des Gassacks zwischen den Klemmbacken zu ermöglichen, ist die Airbagkappe im Bereich der Klemmbacken elastisch verformbar. Hierfür ist es zweckmäßig, dass die Seitenwand der Airbagkappe senkrecht verlaufende Schlitze aufweist.

Das Klemmelement kann unterschiedlich ausgeführt sein. So kann es Teil eines zwischen dem Gasgenerator und dem Gassack angeordneten Diffusors sein. Als Klemmelement kann aber auch ein gesondertes Bauteil vorgesehen sein. Vorzugsweise ist als Klemmelement ein Klemmring vorgesehen, der zusätzlich einen rohrförmigen Abschnitt aufweisen kann, der in den Gassack hineinragt.

Die Erfindung soll in Ausführungsbeispielen an hand von Zeichnungen erläutert werden. Es zeigen:
- Fig. 1: einen Schnitt durch einen Abschnitt eines Airbagmoduls mit einer ersten Ausführungsform eines Klemmringes als Klemmelement;
- Fig. 2: einen Schnitt durch einen Abschnitt eines Airbagmoduls mit einer zweiten Ausführungsform eines Klemmringes als Klemmelement;
- Fig. 3: einen Schnitt durch eine Airbagkappe.

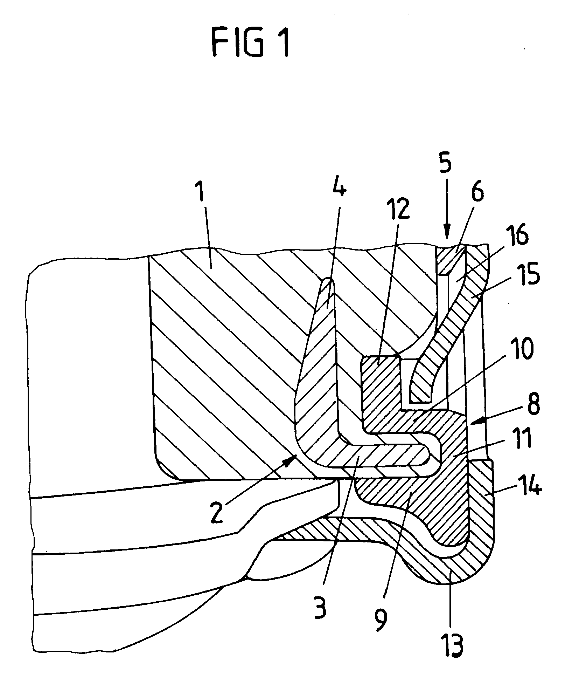

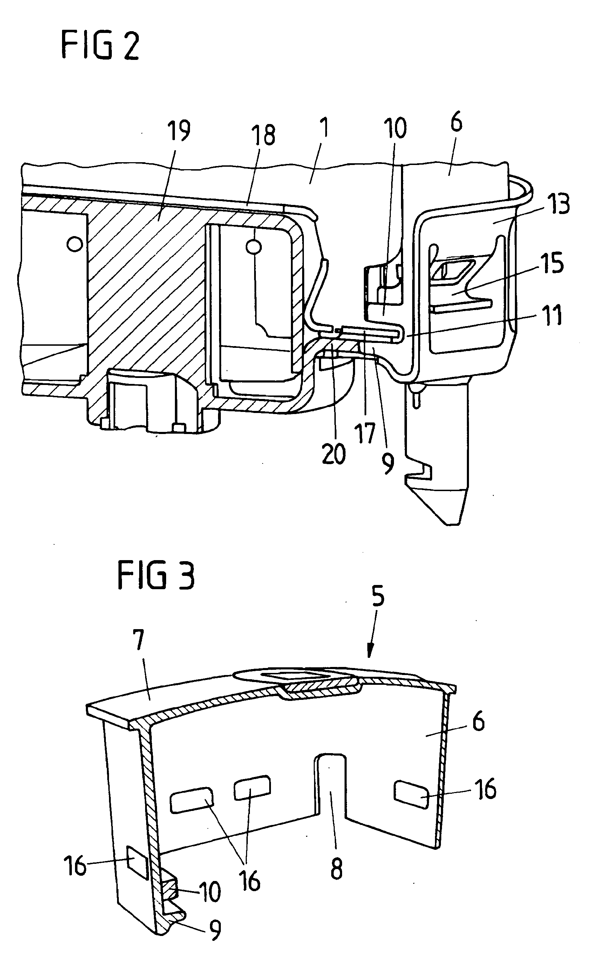

Die Fig. 1 zeigt einen Gassack 1 mit einem integrierten Klemmring 2, der einen waagerechten, ringförmigen Abschnitt 3 und einen rohrförmigen Abschnitt 4 aufweist. Der Klemmring 2 ist z.B. in den Gassack 1 eingenäht. Eine Airbagkappe 5 weist eine Seitenwand 6 auf, die umlaufend ist und in Abständen, bei einem rechteckigen Grundriss der Seitenwand vorzugsweise in den Ecken, in Richtung der oberen Abdeckung 7 der Airbagkappe verlaufende Schlitze 8 aufweist (Fig.3). Diese Schlitze gewährleisten, dass jeder Abschnitt der Seitenwand 6 bei der Montage des Gassacks 1 elastisch verformbar ist.

Am unteren Ende der Seitenwand 6 ist mindestens ein Klemmbackenpaar vorgesehen, das eine untere Klemmbacke 9 und eine obere Klemmbacke 10 aufweist, die durch einen Steg 11 miteinander verbunden sind. Die obere Klemmbacke 10 weist einen Anschlag 12 auf.

Weiterhin ist ein Generatorträger 13 vorgesehen, der mindestens eine Seitenwand 14 mit Rastelementen oder mit von außen verformbaren mechanischen Elementen aufweist, von denen in der Fig. 1 ein Rastelement bzw. von außen verformbares mechanisches Element 15 im Schnitt dargestellt ist. Diesem ist in der Seitenwand 6 der Airbagkappe 5 jeweils eine Öffnung 16 zugeordnet.

Die Montage des Gassacks erfolgt in der Weise, dass der gefaltete Gassack 1 mit dem im Bereich seines Einblasmundes eingenähten Klemmring 2 als Gassackpaket, das in einer in den Figuren nicht dargestellten Folie vakuumverpackt ist, in die Airbagkappe 5 eingelegt wird. Dabei ist es wegen der Schlitze 8 in der Seitenwand 6 der Airbagkappe 5 möglich, dass die Seitenwand abschnittsweise elastisch nach außen gebogen wird, um das Einführen des ringförmigen Abschnitts 3 des Klemmringes 2 zwischen die Klemmbacken 9, 10 zu ermöglichen. Diese Einheit aus Airbagkappe 5 und dem Gassackpaket 1 wird anschließend in den Generatorträger 13 eingefügt. Hierbei werden durch die Seitenwand 6 der Airbagkappe 5 die nach innen ragenden Rastelemente 15 elastisch nach außen gedrückt, bis sie durch die Öffnungen 16 in der Seitenwand 6 der Airbagkappe 5 wieder zurückfedern können und dann auf der oberen Klemmbacke 10 aufliegen und damit sowohl der Generatorträger 13 mit der Airbagkappe 5 verrastet ist als auch das Gassackpaket 1 zwischen den Klemmbacken 9, 10 eingeklemmt ist. Da die Klemmung zwischen den Rastelementen 15 und der jeweils oberen Klemmbacke 10 erfolgt, ist eine Beschädigung der Verpackungsfolie bzw. des Gassacks durch die Rastelemente ausgeschlossen. Die zusätzlich vorgesehenen Anschläge 12 verhindern zusätzlich jede Berührung der Rastelemente 15 mit dem Gassackpaket 1.

Bei der Ausführungsform der Fig. 2 ist an Stelle eines gesonderten Klemmringes ein ringförmiger Abschnitt 17 eines Diffusors 18 vorgesehen, der einen Gasgenerator 19 umschließt. Der Gassack 1 umschließt den ringförmigen Abschnitt 17 im Bereich seines Einblasmundes und ist dort zwischen den unteren und oberen Klemmbacken 9, 10 eingeklemmt. Zusätzlich liegt der ringförmige Abschnitt 17 angrenzend an die untere Klemmbacke 9 auf einem Generatorflansch 20 auf.

In dem in der Fig.3 dargestellten Schnitt durch die Airbagkappe 5 sind die Klemmbacken 9, 10 nur auf der linken Seite dargestellt worden. Sie sind aber zumindest im Bereich der Öffnungen 16 vorgesehen.

## Patentansprüche

1. Gassackbefestigung in einem Airbagmodul mit einem Generatorträger, mit einem Gassack mit Einblasmund, wobei das Airbagmodul mindestens eine Seitenwand aufweist, und mit mindestens einem verformbaren mechanischen Element zur Verbindung des Generatorträgers mit der Seitenwand,
**dadurch gekennzeichnet,**
**dass** das Airbagmodul (5) an seiner Seitenwand (6) Klemmbacken (9, 10) für die Befestigung des Gassacks (1) im Bereich seines Einblasmundes aufweist und dass die verformbaren mechanischen Elemente (15) am Generatorträger (13) vorgesehen sind und auf mindestens eine der Klemmbacken (10) einwirken.

2. Gassackbefestigung nach Anspruch 1, **dadurch gekennzeichnet, dass** als Seitenwand die einer Airbagkappe vorgesehen ist.

3. Gassackbefestigung nach Anspruch 1 oder 2, **dadurch gekennzeichnet, dass** als verformbare mechanische Elemente Rastelemente vorgesehen sind.

4. Gassackbefestigung nach mindestens einem der vorhergehenden Ansprüche, **dadurch gekennzeichnet, dass** als verformbare mechanische Elemente solche vorgesehen sind, die von außen plastisch verformbar sind.

5. Gassackbefestigung nach mindestens einem der vorhergehenden Ansprüche, **dadurch gekennzeichnet, dass** der Gassack (1) mindestens ein nach außen ragendes Klemmelement (3,17) aufweist, dem nach innen ragende, im Abstand übereinander liegende Klemmbacken (9, 10) als mindestens ein Klemmbackenpaar zugeordnet sind, das zwischen dem Generatorträger (13) und den verformbaren mechanischen Elementen (15) klemmbar ist.

6. Gassackbefestigung nach Anspruch 5, **dadurch gekennzeichnet, dass** verformbare mechanische Elemente (15) an einer annähernd parallel zur jeweiligen Seitenwand (6) der Airbagkappe (5) verlaufenden Seitenwand (14) des Generatorträgers (13) angeordnet sind und jedes mechanische Element (15) einer oberen Klemmbacke (10) der Airbagkappe (5) durch Öffnungen (16) in der Seitenwand (6) der Airbagkappe (5) zugeordnet ist.

7. Gassackbefestigung nach Anspruch 6, **dadurch gekennzeichnet, dass** jede obere Klemmbacke (10) einen Anschlag (12) aufweist, der zwischen dem Gassack (1) und dem verformbaren mechanischen Element (15) liegt.

8. Gassackbefestigung nach mindestens einem der vorhergehenden Ansprüche, **dadurch gekennzeichnet, dass** die Seitenwand (6) der Airbagkappe (5) im Bereich der Klemmbacken (9, 10) elastisch verformbar ist.

9. Gassackbefestigung nach Anspruch 8, **dadurch gekennzeichnet, dass** die Seitenwand (6) der Airbagkappe (5) senkrecht verlaufende Schlitze (8) aufweist.

10. Gassackbefestigung nach mindestens einem der Ansprüche 5 bis 9, **dadurch gekennzeichnet, dass** das Klemmelement (17) Teil eines zwischen einem Gasgenerator (19) und dem Gassack (1) angeordneten Diffusors (18) ist.

11. Gassackbefestigung nach mindestens einem der Ansprüche 5 bis 9, **dadurch gekennzeichnet, dass** als Klemmelement ein gesondertes Bauteil (2) vorgesehen ist.

12. Gassackbefestigung nach mindestens einem der Ansprüche 5 bis 11, **dadurch gekennzeichnet, dass** als Klemmelement ein Klemmring (2)vorgesehen ist.

13. Gassackbefestigung nach Anspruch 12, **dadurch gekennzeichnet, dass** der Klemmring (2) einen rohrförmigen Abschnitt (4) aufweist.

## Claims

1. An airbag fastening in an airbag module having a generator support, having an airbag with an inflation opening, wherein the airbag module has at least one side wall, and having at least one deformable mechanical element for connecting the generator support to the side wall,
**characterized in that**,
the airbag module (5) has at its side wall (6) clamp jaws (9, 10) for fastening the airbag (1) in the region of its inflation opening and that the deformable mechanical elements (15) are provided on the generator support (13) and act upon at least one of the clamp jaws (10).

2. Airbag fastening as claimed in claim 1, **characterized in that**, as side wall the sidewall one of an airbag cap is provided.

3. Airbag fastening as claimed in claim 1 or 2, **characterized in that**, as deformable mechanical elements latching elements are provided.

4. Airbag fastening as claimed in at least one of the preceding claims, **characterized in that**, as deformable mechanical elements such elements are provided which are plastically deformable from the outside.

5. Airbag fastening as claimed in at least one of the preceding claims, **characterized in that**, the airbag (1) has at least one clamp element (3, 17) extending outwardly to which at least one clamp jaw pair is assigned, whereby the clamp jaw pair consists of distantly superposed clamp jaws (9,10) extending inwardly, whereby the clamp jaw pair is clampable between the generator support (13) and the deformable mechanical elements (15).

6. Airbag fastening as claimed in claim 5, **characterized in that**, deformable mechanical elements (15) are arranged at a side wall (14) of the generator support (13) running nearly parallel to the respective side wall (6) of the airbag cap (5) and each mechanical element (15) is assigned to an upper clamp jaw (10) of the airbag cap (5) through openings (16) in the side wall (6) of the air bag cap (5).

7. Airbag fastening as claimed in claim 6, **characterized in that** each upper jaw clamp (10) has a stopper (12) located between the airbag (1) and the deformable mechanical element (15).

8. Airbag fastening as claimed in at least one of the preceding claims, **characterized in that** the side wall (6) of the airbag cap (5) is elastically deformable in the region of the clamp jaws (9, 10).

9. Airbag fastening as claimed in claim 8, **characterized in that** the side wall (6) of the airbag cap (5) has vertical slots (8).

10. Airbag fastening as claimed in at least one of the claims 5 to 9, **characterized in that** the clamp element (17) is part of a diffuser (18) arranged between a gas generator (19) and the airbag (1).

11. Airbag fastening as claimed in at least one of the claims 5 to 9, **characterized in that** as clamp element a separate part (2) is provided.

12. Airbag fastening as claimed in at least one of the claims 5 to 11 **characterized in that** as clamp element a clamp ring (2) is provided.

13. Airbag fastening as claimed in claim 12, **characterized in that** the clamp ring has a tubular section (4).

## Revendications

1. Fixation de coussin à gaz dans un module d'airbag avec un porte-générateur, un coussin à gaz avec une embouchure de gonflage, ledit module d'airbag comprenant au moins une paroi latérale, et avec au moins un élément mécanique déformable pour la liaison du porte-générateur avec la paroi latérale,
**caractérisée en ce que**
le module d'airbag (5) comprend sur sa paroi latérale (6) des mâchoires de serrage (9, 10) pour la fixation du coussin à gaz (1) dans la région de son embouchure de gonflage, et **en ce que** les éléments mécaniques déformables (15) sont prévus sur le porte-générateur (13) et agissent sur l'une au moins des mâchoires de serrage (10).

2. Fixation de coussin à gaz selon la revendication 1, **caractérisée en ce que** l'un des capuchons d'airbag est prévu à titre de paroi latérale.

3. Fixation de coussin à gaz selon la revendication 1 ou 2, **caractérisée en ce que** des éléments d'enclenchement sont prévus à titre d'éléments mécaniques déformables.

4. Fixation de coussin à gaz selon l'une au moins des revendications précédentes, **caractérisée en ce que** des éléments qui sont déformables plastiquement de l'extérieur sont prévus à titre d'éléments mécaniques déformables.

5. Fixation de coussin à gaz selon l'une au moins des revendications précédentes, **caractérisée en ce que** le coussin à gaz comprend au moins un élément de serrage (3, 17) qui dépasse vers l'extérieur et auquel sont associées, à titre d'au moins une paire de mâchoires de serrage, des mâchoires de serrage (9, 10) en saillie vers l'intérieur et disposées à distance l'une au-dessus de l'autre, qui peuvent être serrées entre le porte-générateur (13) et les éléments mécaniques déformables (15).

6. Fixation de coussin à gaz selon la revendication 5, **caractérisée en ce que** des éléments mécaniques déformables (15) sont agencés sur une paroi latérale (14) du porte-générateur (13), laquelle s'étend approximativement parallèlement à la paroi latérale respective (6) du capuchon d'airbag (5), et **en ce que** chaque élément mécanique (15) est associé à une mâchoire de serrage supérieure (10) du capuchon d'airbag (5) à travers des ouvertures (16) dans la paroi latérale (6) du capuchon d'airbag (5).

7. Fixation de coussin à gaz selon la revendication 6, **caractérisée en ce que** chaque mâchoire de serrage supérieure (10) comporte une butée (12) qui se trouve entre le coussin à gaz (1) et l'élément mécanique déformable (15).

8. Fixation de coussin à gaz selon l'une au moins des revendications précédentes, **caractérisée en ce que** la paroi latérale (6) du capuchon d'airbag (5) est élastiquement déformable dans la région des mâchoires de serrage (9, 10).

9. Fixation de coussin à gaz selon la revendication 8, **caractérisée en ce que** la paroi latérale (6) du capuchon d'airbag (5) comporte des fentes (8) qui s'étendent verticalement.

10. Fixation de coussin à gaz selon l'une au moins des revendications 5 à 9, **caractérisée en ce que** l'élément de serrage (17) fait partie d'un diffuseur (18) agencé entre un générateur de gaz (19) et le coussin à gaz (1).

11. Fixation de coussin à gaz selon l'une au moins des revendications 5 à 9, **caractérisée en ce qu'**il est prévu un composant séparé (2) à titre d'élément de serrage.

12. Fixation de coussin à gaz selon l'une au moins des revendications 5 à 11, **caractérisée en ce qu'**il est prévu une bague de serrage (2) à titre d'élément de serrage.

13. Fixation de coussin à gaz selon la revendication 12, **caractérisée en ce que** la bague de serrage (2) comprend un tronçon (4) de forme tubulaire.
